# EUROPEAN PATENT APPLICATION

(11) **EP 2 660 730 A1**
(43) Date of publication of application: **06.11.2013**
(21) Application number: 11853360.3
(22) Date of filing: 30.12.2011
(51) Int. Cl.: G06F 17/30

(54) **DATA FILTERING SYSTEM AND METHOD**

(30) Priority: 31.12.2010 CN 201010619385
(71) Applicant: China Unionpay Co., Ltd, Pudong New District, Shanghai 200135 (CN)
(72) Inventor: XIAO, Zhe, Shanghai 200135 (CN); YANG, Fan, Shanghai 200135 (CN)
(74) Representative: Wunderlich, Rainer
(86) International application number: PCT/CN2011/002225
(87) International publication number: WO 2012/088769

(57) **Abstract**

The invention provides a data filtering system and method, wherein the data filtering system comprises: an extracting unit for extracting property characteristic of source data and sending it to a selecting unit; the selecting unit for selecting at least one property characteristic based on which data filtering is performed and for sending the selected property characteristic to a filtering condition generating unit; the filtering condition generating unit which, according to the selected at least one property characteristic, generates at least one filtering module that corresponds to the at least one property characteristic respectively and combines the at least one filtering module to generate filtering conditions; a data filter analysis unit which performs the filtering on source data according to the filtering conditions to thereby generate target data. With the invention, it is ensured that when characteristic of data changes, filtering modules can be recombined freely so as to adapt to the change of data characteristic efficiently.

## Description

### FIELD OF THE INVENTION

The present invention relates to the technical field of information processing, and in particular to a data filtering system and method which is based on a free recombination of modules.

### BACKGROUND

In the prior art, there are three kinds of data filtering:

The first way of filtering is completely static, wherein data filtering is performed based on the given filtering conditions in program instructions;

The second way of filtering is a dynamic filtering which is completely open. For example, if one filtering condition is <=9, "<=" as a filtering parameter and "9" as a filtering parameter will both accept any input from outside. However, once the filtering parameter input from outside does not fit the logic characteristic of filtered data item, data filtering will not be able to be performed. For example, if the value of filtered data item is a temporal character string, the filtering condition is however dynamically set to be smaller than a certain integral value.

The third way of filtering is a dynamic filtering which is half open. That is, a template prototype is used for defining the outside input of filtered parameter and input of open filtered parameter value and to solve the problem that the filtered parameter is often inconsistent with the parameter of the data template prototype, i.e., to ensure that the filtered parameter fits the logic characteristic of the filtered data item. For example, a data filtering method has been disclosed in CN patent application publication of 200910249725.3.

The existing data generally has various property characteristics. Taking transaction data of bank card for example, there are transaction amount property, transaction category property, card issuer property, etc. Users generally have to perform data filtering in respect of different property characteristics under different conditions as required. In the prior art of dealing with data filtering, such a filtering manner is most common that a template prototype is used for defining the selection of filtered parameter and a filtered parameter value dynamic input system is received. However, the filtering template is usually customized in advance and is closely coupled with the application system itself, and is thus unable to perform free recombination and sequential adjustment of filtered items according to realistic data characteristics and unable to meet the requirements of business development and changes. Besides, when filtering demands are changing continuously, subsequent analysis data will generate data redundancy to some extent and thus lead the filter screening to become meaningless.

In addition, since the existing data filtering mechanism is generally based on a given filtering template and is closely coupled with application system, that the fact that it cannot be split separately to perform the free recombination leads to the consequence that once the business changes and the data analysis mechanism has new demands, the loss that will be brought about is a large scale source program revision on a system level and a repeated provision of application system resource is caused.

### SUMMARY OF THE INVENTION

In view of the above, the object of the invention is to provide a data filtering method and system which can dynamically generate filtering conditions to realize filter analysis of data.

The invention provides a data filtering system comprising:

an extracting unit for extracting property characteristic of source data and sending it to a selecting unit;

the selecting unit for selecting at least one property characteristic based on which data filtering is performed and for sending the selected property characteristic to a filtering condition generating unit;

the filtering condition generating unit which, according to the selected at least one property characteristic, generates at least one filtering module that corresponds to the at least one property characteristic respectively and combines the at least one filtering module to generate filtering conditions;

a data filter analysis unit which performs filtering on source data according to the filtering conditions to thereby generate target data.

Preferably, in the data filtering system of the invention, the filtering condition generating unit comprises:

a filtered item generating module which receives the selected at least one property characteristic, generates at least one filtered item and sends it to a filtering module generating module, wherein each filtered item comprises filtered item name, filtering manner, filtering domains corresponding to the selected property characteristics respectively, matching manner and filtered parameter value;

the filtering module generating module for generating at least one filtering module and sending it to a control module, wherein the filtering modules corresponds to the filtered items respectively;

the control module for combining the at least one filtering module to generate filtering conditions.

Preferably, in the data filtering system of the invention, the filtering condition generating unit comprises:

a filtered item generating module which receives the selected at least one property characteristic, generates at least one filtered item and sends it to a filtering module generating module, wherein each filtered item comprises filtered item name, filtered item priority, filtering manner, filtering domains corresponding to the selected property characteristics respectively, matching manner and filtered parameter value;

the filtering module generating module for generating at least one filtering module and sending it to a control module, wherein the filtering modules corresponds to the filtered items respectively;

the control module which combines the at least one filtering module according to the filtered item priority to generate filtering conditions.

Preferably, in the data filtering system of the invention, the filtering manner comprises filter reserving parameter and filter rejecting parameter, wherein

the filter reserving parameter means reserving the data which fits the filtered item;

the filter rejecting parameter means rejecting the data which fits the filtered item.

Preferably, in the data filtering system of the invention, the match manner comprises full character match, head character match, last character match, fuzzy match or section match.

Preferably, in the data filtering system of the invention, the system further comprises an input device which is connected with the selecting unit and the filtering condition generating unit for inputting required information.

Preferably, in the data filtering system of the invention, the system further comprises a display unit which is connected with the extracting unit and the filtering condition generating unit for displaying the information from the extracting unit and the filtering condition generating unit.

The invention also provides a data filtering method comprising the following steps:

A1. extracting the property characteristic of source data;

A2. selecting at least one property characteristic based on which data filtering is performed;

A3. generating a filtering module according to the selected property characteristic, and combining the filtering module to generate filtering conditions;

A4. filtering the source data according to the filtering conditions to generate target data.

Preferably, in the data filtering method of the invention, step A3 further comprises:

generating at least one filtered item, wherein each filtered item comprises filtered item name, filtering manner, filtering domains corresponding to the selected property characteristics respectively, matching manner and filtered parameter value;

generating at least one filtering module, wherein the filtering modules corresponds to the filtered items respectively;

combining the at least one filtering module to generate filtering conditions.

Preferably, in the data filtering method of the invention, step A3 further comprises:

generating at least one filtered item, wherein each filtered item comprises filtered item name, filtered item priority, filtering manner, filtering domains corresponding to the selected property characteristics respectively, matching manner and filtered parameter value;

generating a filtering module which corresponds to the filtered items respectively;

combining the at least one filtering module according to the filtered item priority to generate filtering conditions.

Preferably, in the data filtering method of the invention, the filtering manner comprises filter reserving parameter and filter rejecting parameter, wherein

the filter reserving parameter means reserving the data which fits the filtered item;

the filter rejecting parameter means rejecting the data which fits the filtered item.

Preferably, in the data filtering method of the invention, the match manner comprises full character match, head character match, last character match, fuzzy match or section match.

The technical effects brought about by the invention lies in the following:

(1) Firstly, innovation has been made in respect of the design concept. No filtered item template of filtered parameter is required which is set in advance and is consistent with the data template prototype parameter. The manner of data template prototype limits the flexibility of filtered items to some extent, whereas the invention employs a method in which the filtering mechanism is decoupled with the application system, the filtered items are defined flexibly, and the filtering modules are recombined freely such that the system can automatically adjust filtering logic of filtered items and combination and arrangement of filtering modules according to characteristic of data and change of business, thus accomplishing filtering analysis of data flexibly. Thus, it is ensured that when characteristic of data changes, filtering modules can be recombined freely so as to adapt to the change of data characteristic and pressure efficiently.

(2) Redundancy of code or data is minimized so that when these data are running or being used, the occupied system resource is less and reasonable, thus ensuring high efficiency of use and running of system resource; therefore, pressure of system data is reduced and system stability is guaranteed while ensuring system accuracy.

(3) With the use of the system and method according to the invention, the expense for users to explore program code or data model is reduced, and meanwhile the utilization of existing software resource is also improved, thus avoiding repeated exploration caused by change of business requirements.

### BRIEF DESCRIPTION OF THE DRAWINGS

Fig. 1 is a schematic structure view of the data filtering system according to the invention;

Fig. 2 is a schematic flow chart of the data filtering method according to the invention.

### DETAILED DESCRIPTION OF THE INVENTION

Preferred embodiments of the invention will be described hereinafter with reference to the accompanying drawings, in which identical elements are denoted by identical reference signs.

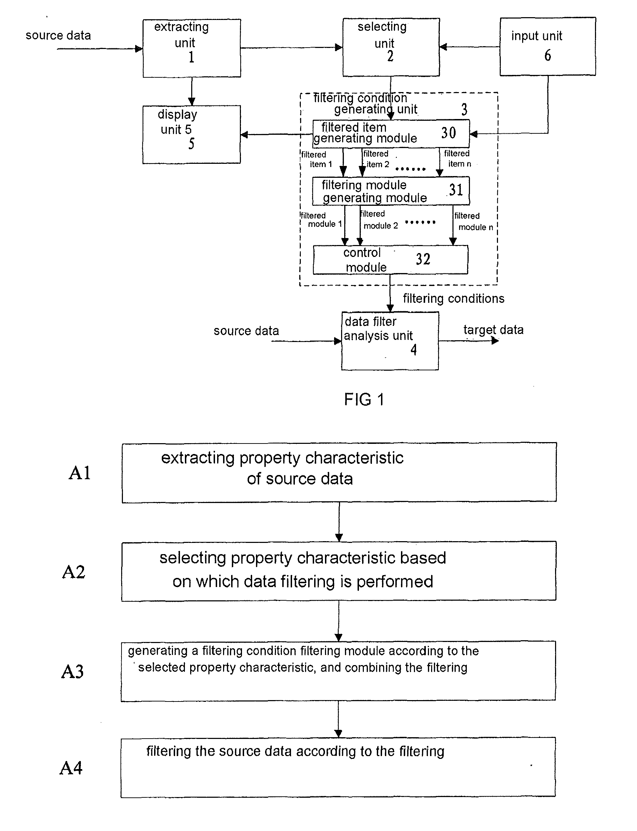

Fig. 1 is a schematic structure view of the data filtering system according to the invention. As shown, the data filtering system comprises an extracting unit 1, a selecting unit 2, a filtering condition generating unit 3, a data filter analysis unit 4, a display unit 5 and an input unit 6. The filtering condition generating unit 3 comprises a filtered item generating module 30, a filtering module generating module 31 and a control module 32.

The extracting unit 1 serves to extract property characteristic of source data and send it to the selecting unit 2 and the display unit 5.

The selecting unit 2 is connected with the display unit 5 so that users can select at least one property characteristic based on which data filtering is performed by means of the input unit 5 and send the selected property characteristic to the filtered item generating module 30 in the filtering condition generating unit 3.

The filtered item generating module 30 receives the selected at least one property characteristic and generates filtered item 1, filtered item 2, ..., filtered item n, wherein n is larger than or equal to 1, and the filtered item generating module 30 sends the filtered items to the filtering module generating module 31, wherein each filtered item comprises filtered item name, filtering manner, filtering domains corresponding to the selected property characteristics respectively, matching manner and filtered parameter value. Preferably, the filtered items can further comprise filtered item priority. Users can input the content of each part of the filtered item by means of the input unit 6.

The filtering manner can comprise the filtering of reserving parameter and the filtering of rejecting parameter, wherein

the filtering of the reserving parameter means reserving the data which fits the filtered item;

the filtering of the rejecting parameter means rejecting the data which fits the filtered item.

The match manner comprises full character match, head character match, last character match, fuzzy match or section match. The full character match manner can perform "=" filtering of an integer type or character type. The head character match can accomplish "=" filtering for the number at any place from the first place of the matched numerical value. The last character match can accomplish "=" filtering for the number at any place retrodicted forwardly from the last place of the matched numerical value. The fuzzy match can accomplish a match similar to typical "like" manner, i.e., the matched numerical value resembles or contains data filtering of the filtered parameter value. The section match can accomplish an integer type match similar to ">", "<" manner or a character type subordination relationship match, etc. This manner of matching can cover all the possible filtered parameter logics without being subject to limitations in fixing filtered parameters in a template prototype. The description of the above match manners is merely exemplary, and those skilled in the art can introduce new manners of matching as actually required without departing from the scope of protection of the invention.

The filtering module generating module 31 further sends the filtered items to the display unit 5 which displays the filtered items in the form of pages.

The filtering module generating module 31 generates filtering module 1, filtering module 2, ..., filtering module n and sends them to the control module, wherein the filtering modules correspond to the filtered items respectively. For example, the filtering module can be a code instruction module which is generated according to the filtered items and which is loaded to the control module for filtering.

The control module 32 combines the at least one filtering module to generate filtering conditions. Preferably, the control module 32 combines the at least one filtering module according to filtered item priority to generate filtering conditions.

The data filter analysis unit 4 filters the source data according to the filtering conditions to thereby generate target data.

Fig. 2 is a schematic flow chart of the data filtering method according to the invention. As shown, the method comprises the following steps:

A1. extracting property characteristic of source data;

A2. selecting at least one property characteristic based on which data filtering is performed;

A3. generating a filtering module according to the selected property characteristic, and combining the filtering module to generate filtering conditions;

A4. filtering the source data according to the filtering conditions to generate target data.

wherein, step A3 further comprises:

generating at least one filtered item, wherein each filtered item comprises filtered item name, filtering manner, filtering domains corresponding to the selected property characteristics respectively, matching manner and filtered parameter value;

generating at least one filtering module, wherein the filtering modules correspond to the filtered items respectively;

combining the at least one filtering module to generate the filtering conditions.

Optionally, step A3 further comprises:

generating at least one filtered item, wherein each filtered item comprises filtered item name, filtered item priority, filtering manner, filtering domains corresponding to the selected property characteristics respectively, matching manner and filtered parameter value;

generating filtering modules which correspond to the filtered items respectively;

combining the at least one filtering module according to the filtered item priority to generate filtering conditions.

With the invention, if the characteristic of subsequent data filtering changes, filtering modules can be recombined according to user's requirements so as to realize re-arrangement and serial combination of the data filtering, thus obtaining better system performance.

The above description is merely a schematic description of preferred embodiments of the invention. Those skilled in the art can readily envisage other embodiments, combinations and modifications. Therefore, the invention is solely defined by appended claims when taken in conjunction with the above description and the accompanying drawings.

## Claims

1. A data filtering system, **characterized in that** comprising:
an extracting unit for extracting property characteristic of source data and sending it to a selecting unit;
the selecting unit for selecting at least one property characteristic based on which data filtering is performed and for sending the selected property characteristic to a filtering condition generating unit;
the filtering condition generating unit which, according to the selected at least one property characteristic, generates at least one filtering module that corresponds to the at least one property characteristic respectively and combines the at least one filtering module to generate filtering conditions;
a data filter analysis unit which performs the filtering on source data according to the filtering conditions to thereby generate target data.

2. The system according to claim 1, **characterized in that** the filtering condition generating unit comprises:
a filtered item generating module which receives the selected at least one property characteristic, generates at least one filtered item and sends it to a filtering module generating module, wherein each filtered item comprises filtered item name, filtering manner, filtering domains corresponding to the selected property characteristics respectively, matching manner and filtered parameter values;
the filtering module generating module for generating at least one filtering module and sending it to a control module, wherein the filtering modules correspond to the filtered items respectively;
the control module for combining the at least one filtering module to generate filtering conditions.

3. The system according to claim 1, **characterized in that** the filtering condition generating unit comprises:
a filtered item generating module which receives the selected at least one property characteristic, generates at least one filtered item and sends it to a filtering module generating module, wherein each filtered item comprises filtered item name, filtered item priority, filtering manner, filtering domains corresponding to the selected property characteristics respectively, matching manner and filtered parameter values;
the filtering module generating module for generating at least one filtering module and sending it to a control module, wherein the filtering modules correspond to the filtered items respectively;
the control module which combines the at least one filtering module according to the filtered item priority to generate filtering conditions.

4. The system according to any of claims 1 to 3, **characterized in that** the filtering manner comprises the filtering of reserving parameter and the filtering of rejecting parameter, wherein
the filtering of reserving parameter means reserving data which fits the filtered item;
the filtering of rejecting parameter means rejecting data which fits the filtered item.

5. The system according to any of claims 1 to 3, **characterized in that** the match manner comprises full character match, head character match, last character match, fuzzy match or section match.

6. The system according to any of claims 1 to 3, **characterized in that** the system further comprises an input device which is connected with the selecting unit and the filtering condition generating unit for inputting required information.

7. The system according to any of claims 1 to 3, **characterized in that** the system further comprises a display unit which is connected with the extracting unit and the filtering condition generating unit for displaying the information from the extracting unit and the filtering condition generating unit.

8. A data filtering method, **characterized in that** comprising:
A1. extracting property characteristic of source data;
A2. selecting at least one property characteristic based on which data filtering is performed;
A3. generating a filtering module according to the selected property characteristic, and combining the filtering module to generate filtering conditions;
A4. filtering the source data according to the filtering conditions to generate target data.

9. The method according to claim 8, **characterized in that** step A3 further comprises:
generating at least one filtered item, wherein each filtered item comprises filtered item name, filtering manner, filtering domains corresponding to the selected property characteristics respectively, matching manner and filtered parameter values;
generating at least one filtering module, wherein the filtering modules correspond to the filtered items respectively;
combining the at least one filtering module to generate filtering conditions.

10. The method according to claim 8, **characterized in that** step A3 further comprises:
generating at least one filtered item, wherein each filtered item comprises filtered item name, filtered item priority, filtering manner, filtering domains corresponding to the selected property characteristics respectively, matching manner and filtered parameter values;
generating a filtering module which corresponds to the filtered items respectively;
combining the at least one filtering module according to the filtered item priority to generate filtering conditions.

11. The method according to any of claims 8 to 10, **characterized in that** the filtering manner comprises the filtering of reserving parameter and the filtering of rejecting parameter, wherein
the filtering of reserving parameter means reserving data which fits the filtered item;
the filtering of rejecting parameter means rejecting data which fits the filtered item.

12. The method according to any of claims 8 to 10, **characterized in that** the match manner comprises full character match, head character match, last character match, fuzzy match or section match.
